# EUROPÄISCHE PATENTANMELDUNG

(11) **EP 1 403 610 A1**
(43) Veröffentlichungstag der Anmeldung: **31.03.2004**
(21) Anmeldenummer: 03018596.1
(22) Anmeldetag: 19.08.2003
(51) Int. Cl.: F42B 12/36, B64C 31/036

(54) **Aufklärungseinrichtung**

(30) Priorität: 23.08.2002 DE 10238717
(71) Anmelder: Diehl Munitionssysteme GmbH & Co. KG, 90552 Röthenbach (DE)
(72) Erfinder: Schleicher, Ulrich, Dr., 91217 Hersbruck (DE)
(74) Vertreter: Diehl Patentabteilung

(57) **Zusammenfassung**

Es wird eine Aufklärungseinrichtung (10) insbesondere für den Nahbereich < 2000 m beschrieben, mit einer Nutzlast (12) und mit einer Fallverzögerungseinrichtung (14). Die Aufklärungseinrichtung (10) ist als Handstartgerät ausgebildet, sie weist zusätzlich zur Nutzlast (12) und zur Fallverzögerungseinrichtung (14) eine Antriebseinrichtung (18) und eine Steuerungseinrichtung (16) auf.

## Beschreibung

Die Erfindung betrifft eine Aufklärungseinrichtung gemäß dem Oberbegriff des Anspruches 1.

Aus der DE 196 13 492 C2 ist eine Aufklärungseinrichtung mit einer Sensoreinheit zum Detektieren und Lokalisieren von Zielen bekannt, die zusammen mit einer entfaltbaren, fallverzögernden Einrichtung mittels eines Artilleriegeschosses verschießbar und aus diesem freigebbar ist. Diese bekannte Aufklärungseinrichtung ist mit einem Bremsschirm und einer Entdrallvorrichtung versehen. Die fallverzögernde Einrichtung ist eine Auftriebseinrichtung, die zur gezielten Bewegung und Erhöhung der Verweildauer über dem Einsatzgebiet der Aufklärungseinheit eine Lenkeinrichtung und eine Antriebseinrichtung aufweist. Diese mit einem Artilleriegeschoß verschießbare und aus diesem freigebbare Aufklärungseinrichtung ist für den Fernbereich vorgesehen.

Der Erfindung liegt die Aufgabe zugrunde, eine Aufklärungseinrichtung der eingangs genannten Art insbesondere für den Nahbereich < 2000 m zu schaffen, die einfach aufgebaut und die ohne spezielles Abschußgerät einfach von einer Person gleichsam beispielsweise wie ein Modellflugzeug, gestartet werden kann.

Diese Aufgabe wird erfindungsgemäß durch die Merkmale des Anspruches 1 gelöst. Bevorzugte Aus- bzw. Weiterbildungen der erfindungsgemäßen Aufklärungseinrichtung sind in den Unteransprüchen gekennzeichnet.

Dadurch, daß die erfindungsgemäße Aufldärungseinrichtung als Handstartgerät ausgebildet ist und zusätzlich zur Nutzlast und Fallverzögerungseinrichtung eine Steuerungseinrichtung aufweist, ist es in vorteilhafter Weise möglich, die erfindungsgemäße Aufklärungseinrichtung ohne spezielle Startgeräte einfach von Hand zu starten. Die erfindungsgemäße Aufklärungseinrichtung ist beispielsweise nicht größer als eine kleine Aktentasche. Bei der Nutzlast der erfindungsgemäßen Aufklärungseinrichtung handelt es sich beispielsweise um Polizei-Güter, um z.B. mit Hilfe der Aufklärungseinrichtung Menschenansammlungen beobachten und/oder mit Hilfe einer Videokamera entsprechende Aufnahmen machen zu können. Mit Hilfe der Steuerungseinrichtung ist die Aufklärungseinrichtung einfach zu steuern. Die Flugzeit der Aufklärungseinrichtung kann beispielsweise größenordnungsmäßig 30 Minuten betragen, selbstverständlich kann sie auch länger sein.

Die Antriebseinrichtung der Aufklärungseinrichtung weist einen Antriebsmotor auf, an dessen Motorwelle ein Propeller befestigbar oder befestigt ist. Der Antriebsmotor ist zweckmäßigerweise von einem Elektromotor gebildet, der mit einer Energieversorgungseinrichtung verbunden ist. Bei der Energieversorgungseinrichtung kann es sich um mindestens eine Thermalbatterie handeln. Bei entsprechender Dimensionierung der Energieversorgungseinrichtung kann die Flugzeit auch größer als 30 Minuten sein.

Die Fallverzögerungseinrichtung ist vorzugsweise als Gleitschirm ausgebildet, der in an sich bekannter Weise lenkbar ist.

Die Nutzlast, die Steuerungseinrichtung mit der Antriebseinrichtung, und die Fallverzögerungseinrichtung sind vorzugsweise als zusammensteckbare Module ausgebildet. Die form- und kraftschlüssige Verbindung der besagten Module kann beispielsweise nach Art der sogenannten Fischertechnik oder nach Art bekannter Spiel-Bausteine mit Noppen und daran angepaßten Ausnehmungen realisiert sein. Die entsprechenden Module können im Bedarfsfall vor Ort zusammengefügt werden. Daraus resultiert eine vergleichsweise einfache und preisgünstige Logistik, was insbesondere für die Infanterie von Wichtigkeit ist.

Die Nutzlast und die Antriebseinrichtung mit der Steuerungseinrichtung können in einem gemeinsamen Gehäuse vorgesehen sein, wobei die Motorwelle aus dem Gehäuse vorsteht, und der Fallverzögerungseinrichtung ist zweckmäßigerweise ein das Gehäuse verschließender und vom Gehäuse entfernbarer Deckel zugeordnet. Das Gehäuse kann von einem Schrumpfschlauch gebildet sein.

Unter Festigkeitsgesichtspunkten und unter dem Gesichtspunkt der Realisierung eines relativ großen Volumens bei relativ kleiner Oberfläche ist es zweckmäßig, wenn das Gehäuse der erfindungsgemäßen Aufklärungseinrichtung mit dem Deckel eiförmig ausgebildet ist.

Weitere Einzelheiten, Merkmale und Vorteile ergeben sich aus der nachfolgenden Beschreibung zweier in der Zeichnung schematisch dargestellter Ausbildungen der erfindungsgemäßen Aufklärungseinrichtung.

Es zeigen:
- Figur 1: eine Vorderansicht einer ersten Ausführungsform der Aufklärungseinrichtung,
- Figur 2: eine Seitenansicht der Aufklärungseinrichtung gemäß Figur 1,
- Figur 3: eine Vorderansicht einer zweiten Ausführungsform der Aufklärungseinrichtung, und
- Figur 4: das Detail IV in Figur 3 in einem größeren Maßstab.

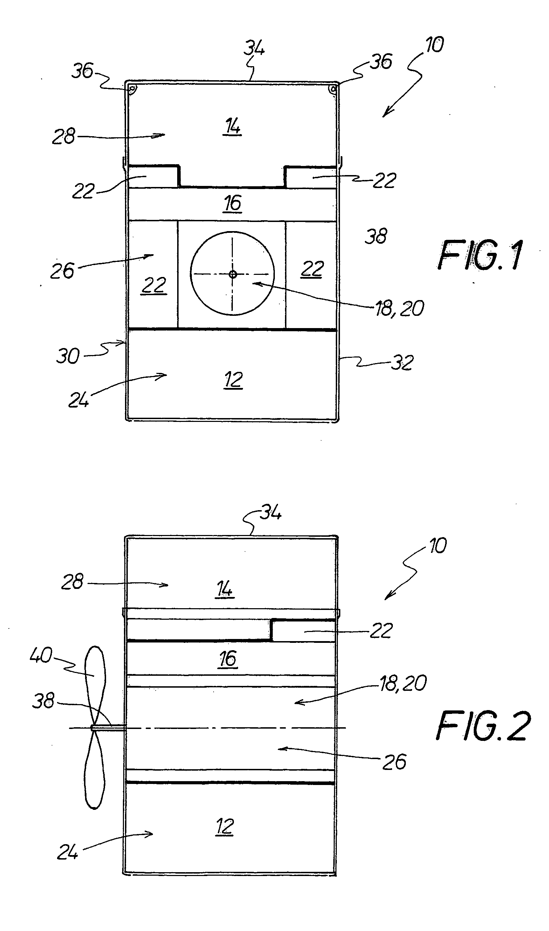

Die Figuren 1 und 2 zeigen eine erste Ausbildung der Aufklärungseinrichtung 10, die insbesondere für den Nahbereich < 2000 m vorgesehen ist. Die Aufklärungseinrichtung 10 weist eine Nutzlast 12 und eine Fallverzögerungseinrichtung 14 auf. Die Nutzlast 12 umfaßt z.B. eine Videokamera zur Aufnahme von Menschenansammlungen, ein Nachtsichtgerät zum Beobachten von Landesgrenzabschnitten während der Dunkelheit und in der Nacht o.dgl. Die Aufklärungseinrichtung kann also beispielsweise der Polizei, den Grenzschutzeinheiten o.dgl. zur Verfügung gestellt werden. Die Fallverzögerungseinrichtung 14 ist vorzugsweise als Lenk- bzw. Gleitschirm ausgebildet. Die als Handstartgerät ausgebildete Aufklärungseinrichtung 10 weist zusätzlich zur Nutzlast 12 und Fallverzögerungseinrichtung 14 eine Steuerungseinrichtung 16 und eine Antriebseinrichtung 18 auf, die von einem Elektromotor 20 gebildet ist, der mit einer Energieversorgungseinrichtung verbunden ist. Die Energieversorgungseinrichtung ist von Batterien 22 gebildet, die zweckmäßigerweise als Thermalbatterien ausgebildet sind. Solche Thermalbatterien weisen den Vorteil auf, daß sie quasi unbegrenzt lagerbar sind.

Die Steuerungseinrichtung 16 weist einen Sender, einen Empfänger, eine Telemetrieeinrichtung usw. auf.

Die Nutzlast 12, die Steuerungseinrichtung 16 mit der Antriebseinrichtung 18 und die Fallverzögerungseinrichtung 14 sind jeweils als zusammensteckbare Module 24, 26 und 28 ausgebildet, die vor Ort einfach und zeitsparend dem jeweiligen Anwendungszweck entsprechend wunschgemäß zusammenbaubar sind. Der Nutzlast-Modul 24 und der die Steuerungs- und Antriebseinrichtung 16 und 18 enthaltende Modul 26 sind in einem gemeinsamen Gehäuse 30 vorgesehen, das beispielsweise von einem Schrumpfschlauch 32 gebildet ist. Der Fallverzögerungseinrichtung 14 ist ein das Gehäuse 30 verschließender und vom Gehäuse 30 entfernbarer Deckel 34 zugeordnet.

Mit der Bezugsziffer 36 sind Befestigungsösen bezeichnet, die am Gleitschirm der Fallverzögerungseinrichtung 14 vorgesehen sind, um die Fallverzögerungseinrichtung 14 mit dem Modul 26 der Antriebseinrichtung 18 und der Steuerungseinrichtung 16 sowie dem Nutzlast-Modul 24 mittels Fang- und Steuerleinen zu verbinden.

Die Welle 38 des Antriebsmotors 20 steht aus dem Gehäuse 30 vor. An ihr ist ein Propeller 40 befestigbar oder befestigt.

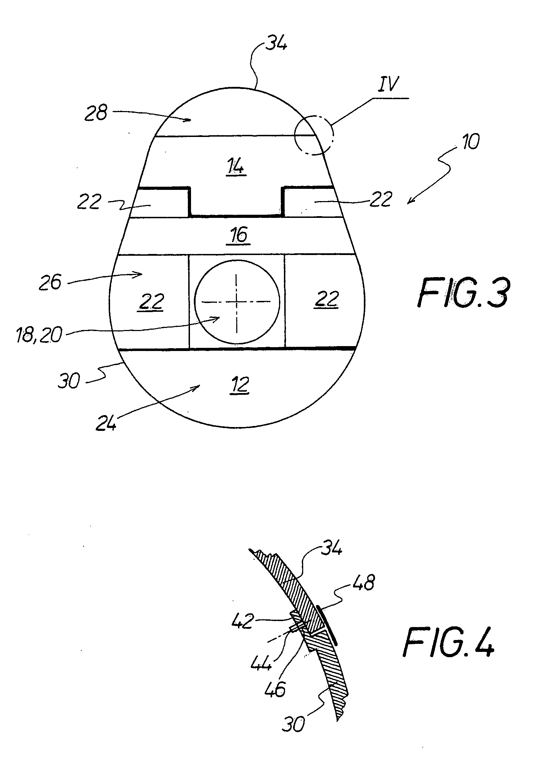

Figur 3 zeigt in einer der Figur 1 ähnlichen Ansicht eine andere Ausbildung der Aufklärungseinrichtung 10, bei der das Gehäuse 30 mit dem Deckel 34 eiförmig ausgebildet ist. Eine solche Eiform weist den Vorteil einer verbesserten Festigkeit auf. Empfindliche Ecken und Kanten werden hierbei vermieden.

Gleiche Einzelheiten sind in Figur 3 mit denselben Bezugsziffern wie in Figur 1 bezeichnet, so daß es sich erübrigt, in Verbindung mit Figur 3 alle diese Einzelheiten noch einmal detailliert zu beschreiben.

Figur 4 verdeutlicht in einer Schnittdarstellung das Detail IV aus Figur 3. Das Gehäuse 30 ist entlang seines Öffnungsrandes mit Laschen 42 ausgebildet. Der Deckel 34 ist entlang seines Randes mit Bolzen 44 versehen, die in Durchgangslöcher 46 eingesteckt sind, die in den Laschen 42 ausgebildet sind. Die Bolzen 44 sind dazu geeignet, Querkräfte aufzunehmen. Ein Verschlußelement 48 dient zum Verschließen des Übergangs zwischen dem Gehäuse 30 und dem Deckel 34. Bei dem Verschlußelement 48 handelt es sich beispielsweise um ein sogenanntes Klettverschlußelement.

### Bezugsziffernliste:

- 10: Aufklärungseinrichtung
- 12: Nutzlast (von 10)
- 14: Fallverzögerungseinrichtung (von 10)
- 16: Steuerungseinrichtung (von 10)
- 18: Antriebseinrichtung (von 10)
- 20: Elektromotor (von 18)
- 22: Batterien (für 20)
- 24: Modul (von 12)
- 26: Modul (von 16 und 18)
- 28: Modul (von 14)
- 30: Gehäuse (für 24 und 26)
- 32: Schrumpfschlauch (von 30)
- 34: Deckel (für 30 bei 14)
- 36: Befestigungsösen (von 14)
- 38: Welle (von 20)
- 40: Propeller (an 38)
- 42: Lasche (von 30)
- 44: Bolzen (von 34)
- 46: Durchgangsloch (in 42)
- 48: Verschlußelement (zwischen 30 und 34)

## Patentansprüche

1. Aufklärungseinrichtung insbesondere für den Nahbereich < 2000 m, mit einer Nutzlast (12) und einer Fallverzögerungseinrichtung (14),
**dadurch gekennzeichnet,**
**daß** die Aulklärungseinrichtung (10) als Handstartgerät ausgebildet ist und zusätzlich zur Nutzlast (12) und Fallverzögerungseinrichtung (14) eine Steuerungseinrichtung (16) und eine Antriebseinrichtung (18) aufweist.

2. Aufklärungseinrichtung nach Anspruch 1,
**dadurch gekennzeichnet,**
**daß** die Antriebseinrichtung (18) einen Antriebsmotor aufweist, an dessen Motorwelle (38) ein Propeller (40) befestigbar oder befestigt ist.

3. Aufklärungseinrichtung nach Anspruch 2,
**dadurch gekennzeichnet,**
**daß** der Antriebsmotor von einem Elektromotor (20) gebildet ist, der mit einer Energieversorgungseinrichtung verbunden ist.

4. Aufklärungseinrichtung nach Anspruch 3,
**dadurch gekennzeichnet,**
**daß** die Energieversorgungseinrichtung von mindestens einer Thermalbatterie (22) gebildet ist.

5. Aufklärungseinrichtung nach Anspruch 1,
**dadurch gekennzeichnet,**
**daß** die Fallverzögerungseinrichtung (14) als Gleitschirm ausgebildet ist.

6. Aufklärungseinrichtung nach einem der Ansprüche 1 bis 5,
**dadurch gekennzeichnet,**
**daß** die Nutzlast (12), die Steuerungseinrichtung (16) mit der Antriebseinrichtung (18) und die Fallverzögerungseinrichtung (14) jeweils als zusammensteckbare Module (24, 26, 28) ausgebildet sind.

7. Aufklärungseinrichtung nach einem der Ansprüche 1 bis 6,
**dadurch gekennzeichnet,**
**daß** die Nutzlast (12), die Antriebseinrichtung (18) und die Steuerungseinrichtung (16) in einem gemeinsamen Gehäuse (30) vorgesehen sind, aus dem die Motorwelle (38) vorsteht, und daß der Fallverzögerungseinrichtung (14) ein das Gehäuse (30) verschließender und vom Gehäuse (30) entfernbarer Deckel (34) zugeordnet ist.

8. Aufklärungseinrichtung nach Anspruch 7,
**dadurch gekennzeichnet,**
**daß** das Gehäuse (30) von einem Schrumpfschlauch (32) gebildet ist.

9. Aufklärungseinrichtung nach Anspruch 7,
**dadurch gekennzeichnet,**
**daß** das Gehäuse (30) mit dem Deckel (34) eiförmig ausgebildet ist.
